# FASCICULE DE BREVET EUROPEEN

(11) **EP 1 914 946 B1**
(45) Date de publication et mention de la délivrance du brevet: **18.01.2017**
(21) Numéro de dépôt: 07118828.8
(22) Date de dépôt: 18.10.2007
(51) Int. Cl.: H04L 12/58

(54) **Procédé de transfert de messages sur terminal mobile, serveur et produit programme d'ordinateur correspondants**
Verfahren zur Übertragung von Nachrichten auf ein mobiles Endgerät, dazugehöriger Server und dazugehöriges Computerprogrammprodukt
Method of transferring messages to a mobile terminal, corresponding server and computer program product

(30) Priorité: 20.10.2006 FR 0609239
(43) Date de publication de la demande: 23.04.2008
(73) Titulaire: Orange, 75015 Paris (FR)
(72) Inventeur: Vilain, Arnaud, 75015, PARIS (FR); De Snoeck, Xavier, 75001, PARIS (FR)
(74) Mandataire: Vidon Brevets & Stratégie

(56) Documents cités:
- EP-A- 1 164 757
- WO-A-99/18716
- WO-A-2004/028108

## Description

La présente invention se rapporte à un procédé comprenant une étape d'enregistrement d'au moins un message dans une base de données d'un premier serveur.

La présente invention se rapporte plus particulièrement au domaine des transferts de messages à destination de terminaux.

Au sein de tels systèmes d'information, des messages, destinés à des utilisateurs, sont stockés en attendant que l'utilisateur en prenne connaissance. De tels messages peuvent être des messages vocaux, des messages vidéo ou des messages textuels. Ces messages sont enregistrés au sein du système d'information dans l'attente que l'utilisateur en prenne connaissance.

Dans l'état actuel de la technique, un système d'information, permet à l'utilisateur de prendre connaissance du message, de le conserver au sein du système ou de le supprimer.

Le document EP 1 164 757 A divulgue un procédé de messagerie pour substituer un (trop grand) affiche par une clé associé.

Le document WO2004 028108 A2 divulgue un procédé pour archiver des messages multimédia dans un serveur de données.

Ainsi, un système d'information de ce type comprend classiquement des serveurs de base de données d'informations d'utilisateurs, des serveurs de stockage de messages, ainsi que des serveurs applicatifs utilisés pour traiter les messages destinés à des utilisateurs clients de la demanderesse.

Dans la suite de ce document, on entend par « message » au moins une information exprimée par un appelant (un utilisateur souhaitant communiquer une information) vers un utilisateur récepteur (encore appelé destinataire par la suite, à savoir l'utilisateur auquel l'information est destinée), suite à une notification d'une absence, d'une indisponibilité ou de toute autre situation rendant la réception d'un appel formulé par l'appelant impossible ou non souhaitée par le destinataire. Une telle information peut être exprimée par l'appelant sous forme vocale, vidéo (dans le cas, par exemple, ou l'appelant et le destinataire disposent d'un service de visiophonie) ou textuelle.

Dans l'état actuel de la technique, lorsqu'un utilisateur n'est pas joignable, des systèmes d'information et des systèmes de communication permettent de laisser un message à cet utilisateur.

Par exemple, lors d'un appel téléphonique, si l'utilisateur à joindre est absent ou non accessible, un système d'information et de communication offre la possibilité à l'appelant de laisser un message vocal à ce destinataire. Ce message vocal est alors enregistré au sein du système d'information. L'utilisateur à joindre peut alors prendre connaissance de ce message en consultant sa messagerie vocal. Un tel principe est également mis en oeuvre au sein de systèmes qui prennent en charge les technologies dédiées à la visiophonie. Ainsi, un appelant équipé d'un terminal autorisant l'enregistrement de messages vidéo peut tout à fait, en lieu et place du message vocal, laisser à l'utilisateur destinataire un message vidéo. Un tel message est également enregistré au sein du système d'information dans l'attente d'une consultation de la part de l'utilisateur.

De même, des messages textuels subissent le même traitement lorsque le système d'information est apte à traiter ce type de message.

L'utilisateur destinataire se connecte par la suite au système d'information en vue de prendre connaissance de ce message. Le système d'information met alors en oeuvre un serveur de messagerie qui délivre, en continu, les messages de l'utilisateur destinataire tout en offrant à ce dernier diverses options, parmi lesquelles l'effacement du message ou sa conservation sur le serveur pendant une période de temps préalablement définie.

Une technique permet, par l'intermédiaire d'un client de messagerie électronique installé au sein d'un type de terminal spécifique, de récupérer ces messages, à la condition que le serveur de messagerie disposent de cette fonctionnalité : l'utilisateur destinataire a la possibilité de contracter une option spécifique proposée par des opérateurs de communication permettant de transférer le message par le biais d'un courrier électronique, lequel pouvant alors être stocké au sein du client de messagerie électronique du terminal, mais que l'utilisateur destinataire ne pourra consulter qu'à l'ouverture de cette application spécifique de messagerie électronique.

Le message vocal ou vidéo à transférer par courrier électronique est ajouté, en tant que pièce jointe, au courrier électronique à transmettre, par un serveur spécifique du système d'information et envoyé à l'utilisateur destinataire.

Les inventeurs ont constaté qu'actuellement un utilisateur est incapable de conserver ses messages au-delà de la période de temps préalablement définie accordé par les paramétrages réalisé au sein d'un système d'information. En effet, les systèmes de messagerie permettent la conservation des messages, quelques soient leurs types pendant un période de temps donné.

Les inventeurs ont également constaté qu'un utilisateur destinataire, qui ne possède pas de terminal spécifique, ne dispose à l'heure actuelle, d'un moyen de conserver ses messages (vocaux, vidéo ou textuels), par exemple au sein de son terminal, pas plus qu'il ne peut transférer ce message à d'autres utilisateurs. Une telle situation peut être frustrante pour l'utilisateur. En effet, les terminaux, parmi lesquels les téléphones mobiles, incluent de plus en plus de fonctionnalités, de puissance de calcul et d'espace de stockage. Des utilisateurs possédant de tels terminaux peuvent y embarquer des images, des vidéos, des sons ainsi que divers fichiers dans de nombreux formats multimédia qu'ils peuvent lire ou exécuter à loisir. Or, comme l'ont constaté les inventeurs, stocker, de manière simple et rapide, les messages laissés par des appelants, n'est pas possible, d'où une certaine sensation de frustration à l'égard d'un terminal souvent coûteux.

Les inventeurs ont également constaté qu'un utilisateur actuellement doit disposer de terminal spécifique pour se voir transférer des messages par courrier électronique. En effet, un tel transfert nécessite, outre un abonnement spécifique, une connexion à un serveur de courrier électronique. Or, cette connexion est généralement imputée sur le forfait de connexion de l'utilisateur.

Les inventeurs ont en outre constaté qu'actuellement, même avec un abonnement spécifique il n'est pas possible de faire le tri entre les messages (donc discriminer entre les messages) qu'un utilisateur souhaite recevoir et ceux qu'il ne souhaite pas recevoir localement sur son terminal.

Enfin, les inventeurs ont constaté que ces terminaux spécifiques ne sont généralement pas bon marché, ce qui ne permet pas à tous les utilisateurs de profiter du téléchargement de messages.

L'invention vise à pallier aux inconvénients décrits précédemment.

Le procédé selon l'invention est caractérisé en ce que ledit procédé comprend une étape de sélection dudit message au sein de ladite base de données au vue de son transfert vers un terminal.

De cette façon, le procédé permet un utilisateur de faire le tri entre ses messages.

Dans un mode de réalisation, ledit procédé comprend en outre une étape de transfert dudit message depuis ladite base de données vers ledit terminal.

De cette façon, le procédé permet à un utilisateur de conserver ses messages au-delà d'une période prédéfinie dans un système d'information.

Dans un autre mode de réalisation, ledit procédé comprend en outre une étape d'enregistrement dudit message dans une espace mémoire dudit terminal.

De cette façon, un utilisateur a la possibilité de conserver les messages au sein du terminal utilisateur et de les transférer, par exemple à un ami.

L'invention concerne également un procédé de transfert d'au moins un flux de données numériques représentatif d'un message destiné à un utilisateur, à destination d'un terminal de communication, ledit message étant enregistré au sein d'une messagerie accessible par l'intermédiaire d'un premier serveur.

Selon l'invention, ledit premier serveur est couplé avec un deuxième serveur, lequel donne accès à ladite messagerie dudit utilisateur, guidant ledit utilisateur lors d'opérations de consultation de ladite messagerie et ledit procédé comprend :
- une phase d'identification, au sein dudit deuxième serveur, dudit message à transférer ;
- une phase de création, par ledit premier serveur, dudit au moins un flux de données numériques apte à être enregistré au sein dudit terminal.

Ainsi, l'invention permet de pallier à des inconvénients en permettant à un utilisateur de se voir transférer un flux numérique représentatif d'un message qui lui est destiné par l'intermédiaire de deux serveurs : un premier serveur permet d'accéder à la messagerie de l'utilisateur. Cette messagerie peut par exemple contenir les messages vocaux, multimédia ou textuels qui sont destinés à l'utilisateur. Ce premier serveur est couplé avec un deuxième serveur qui autorise l'utilisateur à consulter sa messagerie. Un tel serveur peut par exemple être un serveur vocal de consultation, un serveur de consultation interactif ou encore un serveur multimédia. Ce serveur permet à l'utilisateur de prendre connaissance et de gérer ses messages. Le procédé selon l'invention consiste à identifier, au sein du premier serveur, un message que l'utilisateur souhaite transférer puis à effectuer la création du flux numérique à transférer sur la base de ce message. Ainsi, on autorise le transfert d'un flux numérique créé à partir du message, mais ce flux n'est pas le message en lui-même.

Dans un mode de réalisation particulier de l'invention, le premier et le deuxième serveur peuvent être confondu, tant et si bien qu'ils font l'objet d'une unique implémentation au sein d'un même serveur.

Selon une caractéristique particulière de l'invention, ledit procédé de transfert comprend en outre :
- une phase de transfert synchrone dudit au moins un flux de données numérique à destination dudit terminal ;
- une phase d'acquittement d'une réception dudit au moins un flux numérique, par ledit terminal.

Ainsi, l'invention permet de transférer, de manière synchrone, le flux numérique représentatif du message vers le terminal de l'utilisateur. Par transfert « synchrone », on entend transfert lorsque le terminal est connecté à au moins un réseau de communication apte à fournir un service de transfert de flux numérique. Cette phase de transfert s'accompagne d'une phase d'acquittement automatique du terminal. Cette phase d'acquittement permet non seulement de s'assurer que le terminal a correctement réceptionné le message, mais également permet de prévoir une éventuelle facturation ultérieure du service de transfert.

Selon un aspect original de l'invention, ladite phase d'identification comprend :
- une étape de connexion, dudit utilisateur audit deuxième serveur, par le biais d'un premier réseau de communication ;
- une étape de présentation, par ledit deuxième serveur, d'au moins un message destiné audit utilisateur ;
- une étape de sélection par ledit utilisateur, parmi ledit au moins un message destiné audit utilisateur, dudit message à transférer.

En effet, afin de permettre l'identification du message, il est nécessaire que l'utilisateur puisse entrer en communication avec sa messagerie. Pour se faire, l'utilisateur se connecte à un premier réseau de communication, tel que par exemple le réseau RTC ou le réseau GSM. Le deuxième serveur permet alors à l'utilisateur de consulter sa messagerie et de sélectionner un ou plusieurs messages à transférer. Dans ce mode de réalisation, il est envisagé de considérer que cette étape de sélection équivaut à une commande de service. Dans un mode de réalisation particulier, une fois le message sélectionné, l'utilisateur peut également mettre fin à sa communication et attendre de recevoir le message.

Selon une caractéristique particulière, ladite phase de création comprend :
- une étape de calcul d'une taille initiale dudit message à transférer ;
- une étape de comparaison de ladite taille initiale avec une taille de transfert maximum prédéterminée ; et
- une étape de conversion dudit message à transférer en un message converti si ladite taille initiale excède ladite taille de transfert maximum prédéterminée ;
- une étape de production dudit au moins un flux numérique à partir dudit message à transférer ou dudit message converti si ladite taille initiale excède ladite taille de transfert maximum prédéterminée.

Ainsi, l'invention permet de tenir compte d'au moins une capacité de restitution des terminaux destinataires du flux numérique. En effet la création du flux passe par un calcul de taille de transfert maximum prédéterminée qui peut évoluer non seulement en fonction de caractéristiques du réseau de transport du flux, mais également en fonction des capacités du terminal. Le message initial est donc converti en fonction de cette taille de transfert maximum afin de s'assurer que le destinataire du flux sera bien à même de le restituer. Il est bien entendu que l'homme du métier adaptera sans difficulté cette phase de conversion afin de tenir compte d'autres paramètres, tels que par exemple des logiciels de restitution implantés au sein du terminal de destination.

Selon un mode de réalisation particulier de l'invention, ladite phase de transfert synchrone comprend :
- une étape d'encapsulation dudit au moins un flux numérique au sien d'un message multimédia respectant un format pris en charge par ledit terminal ;
- une étape d'expédition d'au moins un message de service d'initiation d'une communication synchrone à destination dudit terminal ;
- une étape d'établissement, par ledit terminal, au sein d'un second réseau de communication, d'une communication synchrone avec ledit premier serveur à la réception dudit au moins un message de service ;
- une étape de transfert, au sein de ladite communication synchrone, dudit message multimédia vers ledit terminal ;
- une étape d'enregistrement, au sien dudit terminal, dudit message multimédia.

Ainsi, le flux numérique n'est pas directement transféré au terminal destinataire. Il fait l'objet d'une encapsulation au sein d'un message multimédia, dont le format, pris en charge par le terminal, n'est pas obligatoirement le même que celui dans lequel il était stocké au sien du premier serveur. Ce message multimédia est alors expédié au terminal après que ce dernier ait reçu une invitation à se connecté au service d'expédition de message. Selon un mode de réalisation particulier de l'invention, cette invitation peut être transparente par le biais d'un message de service expédié au terminal et ne nécessitant pas d'intervention de la part de l'utilisateur. Dans un mode de réalisation complémentaire, une telle invitation peut être faite à l'utilisateur par le biais d'un appel téléphonique. La phase de transfert ne débute alors que quand l'utilisateur est connecté, par le biais de son terminal, au service considéré.

Selon une caractéristique particulière de l'invention, ladite phase d'identification dudit message à transférer comprend en outre une étape de sélection d'au moins un destinataire dudit au moins un flux numérique à transférer.

En effet, dans au moins certains mode de réalisation, le procédé selon l'invention permet de sélectionner au moins un destinataire de du flux numérique. Ainsi, il est possible d'envoyer un flux numérique représentatif d'un message sélectionné à un utilisateur qui n'est pas a priori le premier destinataire du message. Il est également possible, à l'aide de cette sélection, de recevoir le flux numérique sur un terminal différent de celui avec lequel on interroge le deuxième serveur. Ainsi par exemple, il est possible de sélectionner, à partir de son téléphone mobile, un message vocal dont on souhaite recevoir une copie sur son adresse de messagerie électronique. La sélection du destinataire du flux numérique permet alors d'indiquer une adresse de courrier électronique de destination. Le message initial est alors converti en un format exploitable par le logiciel de courrier électronique, par exemple en mp3.

Selon un mode de réalisation original de l'invention, ledit message multimédia est un message du type « MMS » ;
L'invention permet alors à un utilisateur d'un terminal mobile supportant les messages multimédia de recevoir, sous la forme d'un MMS, un message vocal ou vidéo qu'il était jusqu'alors très difficile de conserver. Ce message multimédia est transmis à l'utilisateur destinataire par le biais d'un deuxième réseau de communication destiné à l'échange d'informations multimédias de ce type.

Dans un mode de réalisation particulier de l'invention, ledit au moins un message de service est un message du type « SMS ».

Ainsi, c'est un message de service de type SMS qui permet au terminal de l'utilisateur de se connecter au deuxième réseau de communication afin d'entrer en phase de transfert synchrone avec le deuxième serveur en vue de l'expédition du flux numérique issu de la conversion du message.

L'invention concerne aussi un serveur de transfert d'au moins un flux de données numériques représentatif d'un message destiné à un utilisateur, à destination d'un terminal de communication, ledit message étant enregistré au sein d'une messagerie accessible par l'intermédiaire dudit serveur de transfert,

Selon l'invention, un tel serveur de transfert est couplé avec un deuxième serveur, lequel donne accès à ladite messagerie dudit utilisateur, guidant ledit utilisateur lors d'opérations de consultation de ladite messagerie et ledit serveur de transfert comprend :
- des moyens d'identification, par l'intermédiaire dudit deuxième serveur, dudit message à transférer ;
- des moyens de création, dudit au moins un flux de données numériques apte à être enregistré au sein dudit terminal.

Un tel serveur comprend également de manière générale des moyens de mise en oeuvre du procédé de transfert tel que décrit précédemment.

Dans un autre mode de réalisation, l'invention concerne également un produit programme d'ordinateur téléchargeable depuis un réseau de communication et/ou stocké sur un support lisible par ordinateur et/ou exécutable par un microprocesseur.

Selon l'invention, dans au moins un mode de réalisation, un tel produit programme d'ordinateur comprend des instructions de code de programme pour l'exécution du procédé de transfert tel que décrit précédemment.

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- la figure 1 est un diagramme de blocs présentant les différentes étapes du procédé de transfert selon l'invention ;
- la figure 2 illustre, de manière simplifiée, une architecture d'un système d'information mettant en oeuvre le procédé de transfert présenté dans la figure 1 ;
- la figure 3 décrit une architecture simplifiée d'un serveur de transfert selon l'invention ;
- la figure 4 décrit un mode de mise en oeuvre particulier du procédé de transfert selon l'invention ;

L'invention propose donc de permettre à un utilisateur d'un terminal de communication de télécharger, au sein de son terminal, les messages (vocaux, vidéos ou textuels) qu'il souhaite conserver. Un tel téléchargement est rendu possible, selon l'invention, grâce à un procédé de transfert de message. Un tel procédé peut être mis en oeuvre en réalisant un pont entre différents composants d'un système d'information et de communication.

Ainsi, les destinataires de communications peuvent conserver, au sein de leurs terminaux, les messages qu'ils ont reçus de la part d'appelant, et ce sans limitation de durée et sans qu'il soit nécessaire qu'ils possèdent des terminaux spécifiques et coûteux. Ainsi, on offre une possibilité supplémentaire de conservation et de consultation de données numériques sur des terminaux de communication. La consultation peut se faire en mode connecté ou en mode déconnecté, une fois le message transféré sur le terminal.

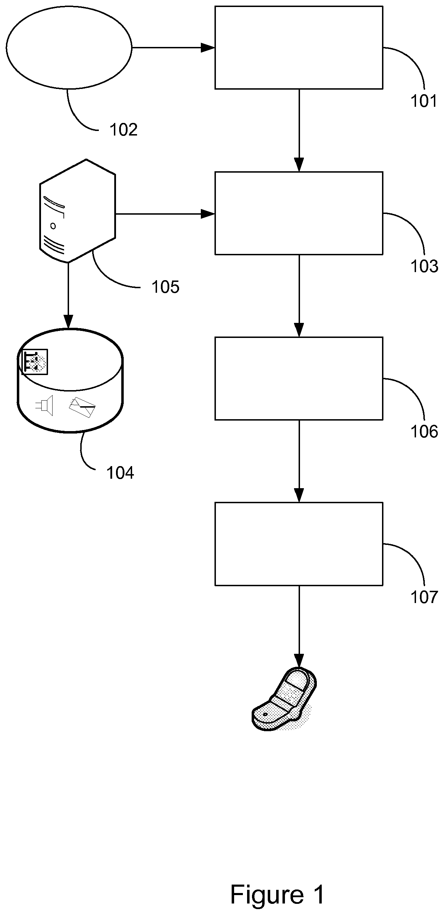

On présente, en relation avec la figure 1, le principe général du procédé de transfert selon l'invention.
- un utilisateur destinataire reçoit (101) une notification 102, l'avertissant qu'un nouveau message l'attend sur sa messagerie. L'utilisateur peut également prendre connaissance de cette notification 102 en se connectant à sa messagerie de sa propre initiative ou par tout autre moyen mis à sa disposition ;
- par le biais d'un serveur multimédia interactif 105, l'utilisateur sélectionne 103, au sein des messages disponibles (104), le message qu'il souhaite transférer ;
- le serveur de messagerie transmet le message sélectionné par l'utilisateur au terminal désigné. Par exemple le serveur crée (106) un flux de données numériques qui est transmis (107).

Par la suite, on présente notamment le cas de l'implémentation du procédé de transfert de message appliqué à un terminal de communication mobile. Il est clair cependant que l'invention ne se limite pas à cette application particulière, mais peut également être mise en oeuvre dans de nombreux autres cas de figures, et par exemple dans la transmission de messages à des utilisateurs de terminaux numérique de salons, tels que les « Set Top Box » (pour « Terminaux Numériques Résidentiels »). Ainsi par exemple, dans le cas d'une utilisation d'un terminal numérique d'accès aux réseau d'un opérateur par ADSL, couplé à l'utilisation d'un terminal de communication analogique, tel qu'un téléphone standard, un mode de réalisation de l'invention peut consister en la transmission, suite à une commande d'un utilisateur sur son terminal analogique, d'un ou plusieurs messages vocaux de la messagerie de sa ligne de téléphone analogique, vers la messagerie de sa ligne de téléphone numérique, ou vers sa messagerie de courrier électronique ou encore vers tout autre type de messagerie numérique pouvant être mise en oeuvre au sein d'un réseau numérique, par exemple UPnP, de l'utilisateur.

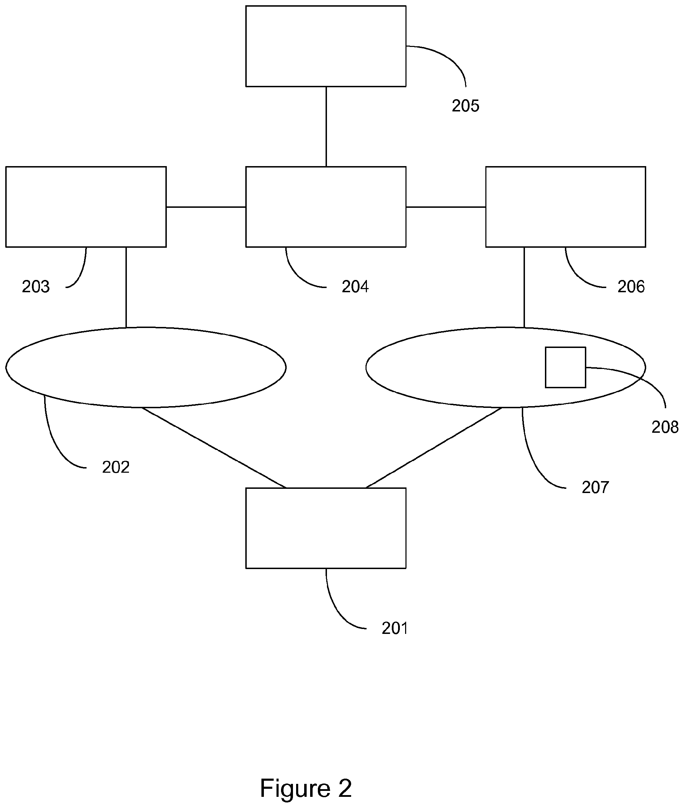

On présente dans ce mode de réalisation, la mise en oeuvre du procédé de transfert au sein d'un système d'information dont l'architecture est présentée en relation avec la figure 2. Un tel système, selon l'invention, est destiné à permettre le téléchargement, vers un terminal d'un utilisateur destinataire, de message audio/vidéo depuis la messagerie de l'utilisateur destinataire au sein d'un opérateur de télécommunication, sous la forme de MMS (de l'anglais « Multimedia messaging service » pour « Service de Message Multimédia »). Il comprend :
- des terminaux mobiles des clients destinataires, 201, tels que par exemple des téléphones mobiles 2G, 2,5G ou 3G, des assistants personnels, des ordinateurs portables, etc.
- un réseau circuit mobile (CS) 202, tel que par exemple un réseau mobile GSM (de l'anglais « Global System for Mobile Communications » pour « Système de communication global pour mobile ») ou UMTS (de l'anglais « Universal Mobile Telecommunications System » pour « Système de communication universel pour mobile »)...
- au moins un Serveur Vocal Interactif 203 permettant la consultation de la messagerie mobile ;
- au moins un serveur de Messagerie Audio/Vidéo 204 permettant de traiter les messages ;
- un éventuel Serveur d'encodage des messages audio/vidéo 205, permettant de réduire, le cas échéant, la taille des messages qui seront téléchargés par les terminaux mobiles des clients destinataires ;
- au moins un serveur de génération de MMS 206, permettant de produire automatiquement des MMS contenants des messages audio et/ou vidéo à envoyer aux terminaux mobiles des clients destinataires.
- un Réseau Data Mobile (PS) 207, par exemple du type GPRS (de l'anglais « General Packet Radio Service » pour « Service général de transmission de paquets sur onde radio »), EDGE (de l'anglais « Enhanced Data Rates for Global Evolution » pour « Taux de transfert amélioré pour une évolution globale [des services de transmission de données sur terminaux mobiles] »), autorisant le transfert de données à destination d'un terminal.
- au moins un Serveur de MMS 208, appartenant, par exemple, au réseau data mobile, responsable de la diffusion des MMS.

Dans ce mode de réalisation, il est fait appel à deux réseaux de transferts de données distincts. En effet, une telle séparation des réseaux de communication est actuellement en vigueur dans le mode de la téléphonie mobile. Notamment, les réseaux de communication vocaux sont différents des réseaux de communication de données. Ainsi, par exemple, un appel vocal classique transite par le biais d'un réseau circuit mobile (CS), tel que par exemple un réseau mobile GSM. De son coté, une communication mettant en oeuvre le protocole WAP d'accès à l'Internet utilise un Réseau Data Mobile (PS), par exemple du type GPRS.

Cependant, il est évident que d'autres modes de réalisation, basés par exemple sur l'utilisation d'un unique réseau de communication peuvent aisément être mis en oeuvre par l'homme du métier, notamment, par exemple, dans une hypothèse d'utilisation d'un Réseau Data Mobile (PS) comme unique moyen de communication avec le terminal mobile.

Dans d'autres modes de réalisation, le procédé de transfert selon l'invention, peut également être mis en oeuvre avec d'autre type de terminaux de communication, tels que des Set Top Box, dans le cas d'une réception de messages au sein d'un réseau local personnel d'un utilisateur, respectant par exemple la norme « Universal Plug and Play » (ou UPnP, expression anglaise pour « reconnaissance universelle d'appareils-»), faisant intervenir différents équipements de communication tels que des téléphones « IP », de l'anglais « Internet Protocol » pour « Protocole Internet » (pour consulter la messagerie), des serveurs de stockage de données numériques (pour stocker les messages, par exemple).

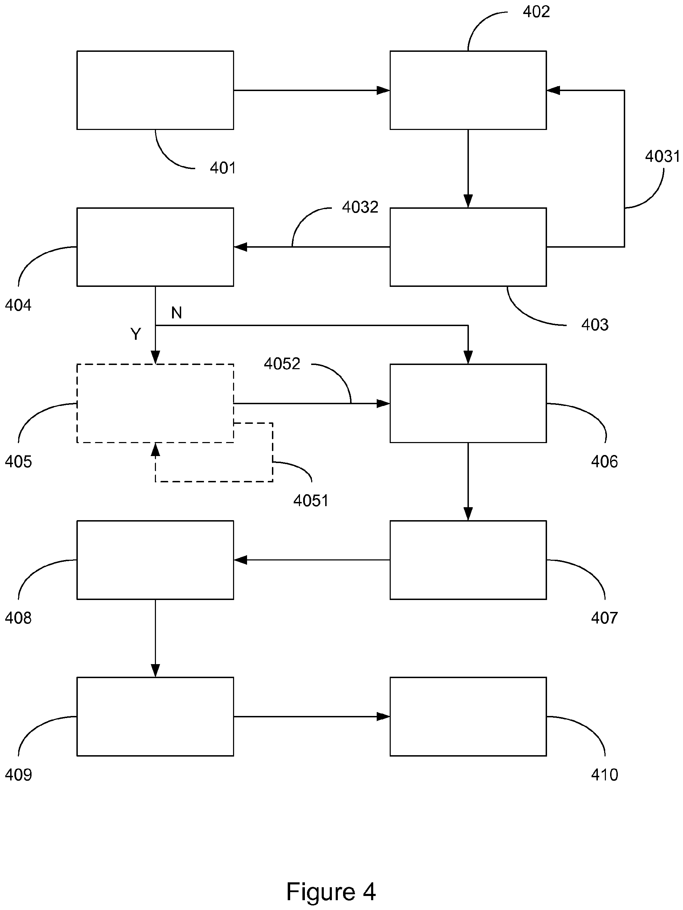

On présente, en relation avec la figure 4, les différentes étapes d'un mode de réalisation du procédé de transfert dans l'architecture de système d'information présenté dans la figure 2.
- un utilisateur du terminal 201 compose le numéro d'appel du Serveur Vocal Interactif 203 pour consulter (401) sa messagerie multimédia, à travers le réseau circuit mobile 202 ;
- le Serveur Vocal Interactif 203 récupère (402) les données de messagerie (nombre de messages non lus, nombre de messages anciens...) au sein du serveur de Messagerie Audio/Vidéo 204 et fournit l'info en retour au terminal 201. L'utilisateur du terminal 201 peut alors naviguer dans le service rendu par Serveur Vocal Interactif 203 pour accéder à l'ensemble de ses messages. Pour chaque message, le Serveur Vocal Interactif 203 peut proposer, de manière classique, de réaliser plusieurs actions, comme de consulter le message, le supprimer, le sauvegarder pendant X jours sur le serveur de Messagerie Audio/Vidéo 204. Le serveur vocal interactif 203 propose également de télécharger le message au sein du terminal 201 ;
- l'utilisateur du terminal 201 saisit (403), par commande vocale ou par « DTMF » (de l'anglais « Dual-tone multi-frequency » pour « Fréquences Vocales »), la commande associée au choix de téléchargement du message en cours de consultation. Le traitement de la demande commence (4032) alors qu'un message est éventuellement remonté à l'utilisateur du terminal 201 pour lui indiquer que sa demande est en cours de traitement. Naturellement, ce message remonté, qui indique que la demande est en cours de traitement, est différent du message en cours de consultation. En parallèle, l'utilisateur peut faire une autre action (4031) sur le message en cours de consultation, ou encore passer au message suivant s'il en a ;
- le Serveur Vocal Interactif 203 qui a interprété la commande de 201 transmet (404) la demande à serveur de Messagerie Audio/Vidéo 204 en fournissant l'identité du message consulté. Le serveur de Messagerie Audio/Vidéo 204 peut alors vérifier la taille du message qui doit être transmis à 201 par la suite. Si le fichier est trop volumineux (Y) par rapport au mode de transmission (MMS par exemple), le serveur de Messagerie Audio/Vidéo 204 peut décider de transmettre le fichier au Serveur d'encodage des messages audio/vidéo 205 pour diminuer sa taille (c.f. 405). Si le fichier est de taille correct (N), il est conservé tel quel pour être envoyé au terminal 201 (c.f. 406) ;
- si le serveur de Messagerie Audio/Vidéo 204 l'a décidé, le Serveur d'encodage des messages audio/vidéo 205 reçoit (405) de serveur de Messagerie Audio/Vidéo 204 une demande d'encodage du fichier message (transmis également) pour que la taille finale soit acceptable pour le mode de transmission. Le Serveur d'encodage des messages audio/vidéo 205 effectue (4051) le codage pour aboutir à un fichier de taille transportable par MMS. Le fichier encodé est renvoyé (4052) au serveur de Messagerie Audio/Vidéo 204. L'homme du métier comprendra aisément que la réduction de la taille du message n'est qu'un mode de réalisation du procédé selon de l'invention. Ainsi, en lieu et place d'une compression, le message peut être converti de plusieurs manières différentes, et notamment en découpant le message, sans perte de qualité afin qu'il soit envoyé sous la forme de plusieurs MMS. Il est encore possible de n'envoyer qu'une seule partie du message (par exemple une partie correspondant à une taille acceptable pour le MMS et/ou représentative d'une durée déterminée). Enfin, dans un autre mode de réalisation, il est possible de laisser à l'utilisateur le choix d'une partie de message à transférer par le biais d'une interface homme machine adaptée au type de message à transférer.
- le serveur de Messagerie Audio/Vidéo 204 dispose alors du fichier message dans un format et une taille adaptés au MMS à envoyer. Le serveur de Messagerie Audio/Vidéo 204 envoie (406) alors le fichier du message au serveur de génération de MMS 206, ainsi que les informations liées à ce message (numéro de l'appelant, date et heure du dépôt de message, ...) et demande la création d'un MMS contenant ce fichier ;
- le serveur de génération de MMS 206 traite (407) le fichier reçu :
   - ce traitement peut débuter par un éventuel renommage du fichier reçu à partir des informations transmises par le serveur de Messagerie Audio/Vidéo 204, par exemple "numéro appelant_date/heure de dépôt". le serveur de génération de MMS 206 insère ce fichier dans un nouveau MMS. Ces informations peuvent également être insérées dans le corps du MMS ;
   - le serveur de génération de MMS 206 lance l'envoi du MMS vers le Serveur de MMS 208 dans le Réseau Data Mobile (PS) 207. Une fois que le Serveur de MMS 208 a reçu le MMS, un SMS est envoyé à 201 pour le prévenir de l'arrivée d'un MMS. Selon l'approche classique, le terminal 201 interprète automatiquement le SMS reçu et lance une connexion de type « données » à travers le réseau 207 vers le serveur 208 pour récupérer le MMS. Le MMS est alors récupéré localement sur le terminal 201 ;
   - à l'issue de la réception complète du message, le terminal 201 renvoie (408) un accusé de réception à destination du serveur 208 afin de certifier que le MMS a été réceptionné. Cet accusé de réception permet, par exemple, au réseau 207 ou au serveur de Messagerie Audio/Vidéo 204 de facturer le service de téléchargement ;
   - l'utilisateur du terminal 201 ouvre (409) le MMS localement sur le terminal. Le client MMS intégré permet de sauvegarder les éléments multimédia insérés dans le MMS. L'utilisateur du terminal 201 peut donc stocker dans le terminal (mémoire interne ou externe) le message. Le message peut alors être consulté comme n'importe quel fichier local au terminal 201, hors couverture, pendant la durée souhaitée.

Ainsi, cette mise en oeuvre du procédé de transfert selon l'invention permet de fournir, à tous les utilisateurs de terminaux mobiles, qui disposent de capacités de stockage adéquates, la possibilité de conserver des messages au sein de leurs terminaux.

Dans un mode de réalisation complémentaire, il est envisageable de transmettre, tout en suivant des étapes similaires à celles présentées précédemment, de proposer à un utilisateur de transférer un message qui lui est destiné à un autre utilisateur. Pour ce faire, une nouvelle étape peut être ajoutée en permettant à l'utilisateur de saisir un identifiant (par exemple un numéro de téléphone, une adresse de courrier électronique) d'un utilisateur auquel il souhaite transférer son message. Les autres étapes restent alors identiques.

Ainsi qu'il peut le paraître pour l'homme du métier à la lumière de la présente description, de nombreux autres modes de réalisation et variantes peuvent aisément être mise en oeuvre tout en conservant le principe de transfert de message selon l'invention.

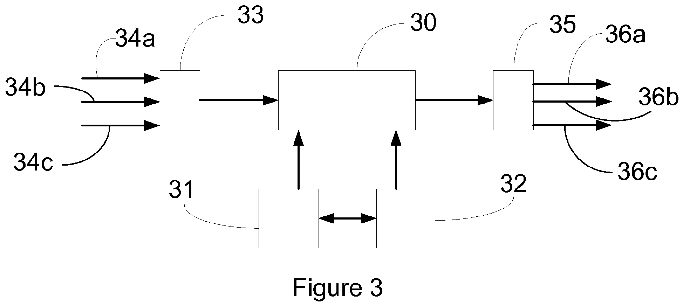

On présente, en relation avec la figure 3, une architecture simplifiée d'un serveur de transfert selon l'invention.

Il comprend une mémoire 31, et une unité de traitement 30 équipée d'un microprocesseur, qui est piloté par un programme d'ordinateur (ou application) 32. L'unité de traitement 30 reçoit en entrée, via un module d'interface d'entrée réseau 33 :
- des demandes de transfert 34a ;
- des messages à transférer 34b ;
- des acquittements de terminaux 34c.

Ces informations sont traitées par le microprocesseur, selon les instructions du programme 32, pour :
- émettre des requêtes 36a de conversion de messages à destination d'un serveur de conversion quand la taille des messages excède la taille maximum de transfert ;
- émettre (36b) les flux numériques à destination d'un serveur d'expédition de messages multimédias si l'architecture du système d'information le permet ; ou
- émettre (36c) les messages multimédias directement à destination des terminaux dans le cas contraire.

Ces données sont transmises via un module d'interface de sortie réseau 35 à destination des dispositifs qui en ont la charge.

## Revendications

1. Procédé de transfert d'un message à un terminal de communication, comprenant une étape d'enregistrement par au moins un utilisateur appelant d'au moins un message vocal ou vidéo, destiné à un utilisateur destinataire, dans une base de données d'un premier serveur, ledit procédé étant **caractérisé en ce qu'**il comprend une étape de sélection d'un message au sein de la base de données en vue de son transfert vers ledit terminal de communication, et en vue de son enregistrement au sein dudit terminal de communication, ladite étape de sélection comprenant :
- une étape de connexion, d'un terminal de l'utilisateur destinataire à un deuxième serveur, par le biais d'un premier réseau de communication ;
- une étape de présentation, par ledit deuxième serveur, d'au moins un message destiné audit utilisateur destinataire ;
- une étape de sélection par ledit utilisateur destinataire, parmi ledit au moins un message, dudit message à transférer.

2. Procédé selon la revendication 1, caractérisé ce que ledit procédé comprend en outre une étape de transfert dudit message depuis ladite base de données vers ledit terminal de communication.

3. Procédé selon la revendication 2, caractérisé ce que ledit procédé comprend en outre une étape d'enregistrement dudit message dans un espace mémoire dudit terminal.

4. Procédé selon l'une quelconque des revendications 2 à 3, **caractérisé en ce qu'**il comprend en outre :
- une étape de transfert synchrone dudit message vers ledit terminal de communication ;
- une phase d'acquittement d'une réception dudit message par ledit terminal de communication.

5. Procédé selon l'une quelconque des revendications 2 à 4, **caractérisé en ce qu'**il comprend en outre :
- une étape de calcul d'une taille initiale dudit message à transférer ;
- une étape de comparaison de la taille initiale avec une taille de transfert maximum prédéterminée ; et
- une étape de conversion dudit message à transférer en un message converti si la taille initiale excède la taille de transfert maximum prédéterminée ;
- une étape de production d'au moins un flux numérique à partir dudit message à transférer ou dudit message converti si la taille initiale excède la taille de transfert maximum prédéterminée.

6. Procédé selon l'une quelconque des revendications 4 à 5, **caractérisé en ce que** ladite étape de transfert synchrone comprend :
- une étape d'encapsulation dudit au moins un flux numérique au sein d'un message multimédia respectant un format pris en charge par ledit terminal de communication ;
- une étape d'expédition d'au moins un message de service d'initiation d'une communication synchrone à destination dudit terminal de communication ;
- une étape d'établissement, par ledit terminal de communication, au sein d'un second réseau de communication, d'une communication synchrone avec le premier serveur à la réception dudit au moins un message de service ;
- une étape de transfert, au sein de ladite communication synchrone, dudit message multimédia vers ledit terminal de communication ;
- une étape d'enregistrement, au sein dudit terminal de communication, dudit message multimédia.

7. Procédé selon l'une quelconque des revendications 1 à 6, **caractérisé en ce qu'**il comprend en outre une étape de sélection d'au moins un destinataire dudit au moins un message.

8. Serveur de transfert d'au moins un flux de données numériques représentatif d'un message vocal ou vidéo destiné à un utilisateur destinataire, à destination d'un terminal de communication, ledit message étant enregistré par au moins un utilisateur appelant au sein d'une messagerie par l'intermédiaire dudit serveur de transfert,
**caractérisé en ce que**, ledit serveur de transfert est couplé avec un deuxième serveur, lequel donne accès à ladite messagerie dudit utilisateur destinataire, guidant ledit utilisateur lors d'opérations de consultation de ladite messagerie et **en ce que** ledit serveur de transfert comprend :
- des moyens d'identification, par l'intermédiaire dudit deuxième serveur, dudit message à transférer ;
- des moyens de création, dudit au moins un flux de données numériques apte à être enregistré au sein dudit terminal de communication.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé selon l'une au moins des revendications 1 à 7, lorsqu'il est exécuté sur un ordinateur.

10. Système de transfert d'un message à un terminal de communication comprenant des moyens d'enregistrement par au moins un utilisateur appelant d'au moins un message vocal ou vidéo destiné à un utilisateur destinataire, dans une base de données d'un premier serveur, **caractérisé en ce que** ledit système comprend des moyens de sélection d'un message au sein de la base de données au vue de son transfert vers ledit terminal de communication, et en vue de son enregistrement au sein dudit terminal de communication, lesdits moyens de sélection comprenant :
- des moyens de connexion, d'un terminal de l'utilisateur destinataire à un deuxième serveur, par le biais d'un premier réseau de communication ;
- des moyens de présentation, par ledit deuxième serveur, d'au moins un message destiné audit utilisateur destinataire ;
- des moyens de sélection par ledit utilisateur destinataire, parmi ledit au moins un message destiné audit utilisateur, dudit message à transférer.

## Patentansprüche

1. Verfahren zur Übertragung einer Nachricht an ein Kommunikationsendgerät, einen Schritt der Aufzeichnung wenigstens einer Sprach- oder Videonachricht, die für einen Zielbenutzer bestimmt ist, durch wenigstens einen anrufenden Benutzer in einer Datenbank eines ersten Servers umfassend, wobei das Verfahren **dadurch gekennzeichnet ist, dass** es einen Schritt der Auswahl einer Nachricht in der Datenbank zwecks ihrer Übertragung an das Kommunikationsendgerät und zwecks ihrer Aufzeichnung in dem Kommunikationsendgerät umfasst, wobei der Schritt der Auswahl umfasst:
- einen Schritt der Verbindung eines Endgerätes des Zielbenutzers mit einem zweiten Server über ein erstes Kommunikationsnetz;
- einen Schritt der Präsentation wenigstens einer für den Zielbenutzer bestimmten Nachricht durch den zweiten Server;
- einen Schritt der Auswahl der zu übertragenden Nachricht aus der wenigstens einen Nachricht durch den Zielbenutzer.

2. Verfahren nach Anspruch 1, **dadurch gekennzeichnet, dass** das Verfahren außerdem einen Schritt der Übertragung der Nachricht aus der Datenbank an das Kommunikationsendgerät umfasst.

3. Verfahren nach Anspruch 2, **dadurch gekennzeichnet, dass** das Verfahren außerdem einen Schritt der Aufzeichnung der Nachricht in einem Speicherraum des Endgerätes umfasst.

4. Verfahren nach einem der Ansprüche 2 bis 3, **dadurch gekennzeichnet, dass** es außerdem umfasst:
- einen Schritt der synchronen Übertragung der Nachricht an das Kommunikationsendgerät;
- eine Phase der Quittierung eines Empfangs der Nachricht durch das Kommunikationsendgerät.

5. Verfahren nach einem der Ansprüche 2 bis 4, **dadurch gekennzeichnet, dass** es außerdem umfasst:
- einen Schritt der Berechnung einer Anfangsgröße der zu übertragenden Nachricht;
- einen Schritt des Vergleichs der Anfangsgröße mit einer vorbestimmten maximalen Übertragungsgröße; und
- einen Schritt der Umwandlung der zu übertragenden Nachricht in eine umgewandelte Nachricht, falls die Anfangsgröße die vorbestimmte maximale Übertragungsgröße überschreitet;
- einen Schritt der Erzeugung, ausgehend von der zu übertragenden Nachricht oder der umgewandelten Nachricht, wenigstens eines digitalen Datenstroms, falls die Anfangsgröße die vorbestimmte maximale Übertragungsgröße überschreitet.

6. Verfahren nach einem der Ansprüche 4 bis 5, **dadurch gekennzeichnet, dass** der Schritt der synchronen Übertragung umfasst:
- einen Schritt der Kapselung des wenigstens einen digitalen Datenstroms in einer Multimedia-Nachricht unter Einhaltung eines Formats, das von dem Kommunikationsendgerät übernommen wurde;
- einen Schritt des Sendens wenigstens einer Servicenachricht der Einleitung einer synchronen Kommunikation an das Kommunikationsendgerät;
- einen Schritt der Einrichtung, durch das Kommunikationsendgerät, einer mit dem ersten Server synchronen Kommunikation innerhalb eines zweiten Kommunikationsnetzes beim Empfang der wenigstens einen Servicenachricht;
- einen Schritt der Übertragung der Multimedia-Nachricht an das Kommunikationsendgerät im Rahmen der synchronen Kommunikation;
- einen Schritt der Aufzeichnung der Multimedia-Nachricht in dem Kommunikationsendgerät.

7. Verfahren nach einem der Ansprüche 1 bis 6, **dadurch gekennzeichnet, dass** es außerdem einen Schritt der Auswahl wenigstens eines Empfängers der wenigstens einen Nachricht umfasst.

8. Server für die Übertragung wenigstens eines digitalen Datenstroms, der für eine Sprach- oder Videonachricht repräsentativ ist, die für einen Zielbenutzer bestimmt ist, an ein Kommunikationsendgerät, wobei die Nachricht durch wenigstens einen anrufenden Benutzer in einer Mailbox durch den Übertragungsserver aufgezeichnet wird,
**dadurch gekennzeichnet, dass** der Übertragungsserver mit einem zweiten Server gekoppelt ist, welcher einen Zugriff auf die Mailbox des Zielbenutzers ermöglicht, wobei er den Benutzer bei Schritten zur Abfrage der Mailbox führt, und dadurch, dass der Übertragungsserver umfasst:
- Mittel zur Identifizierung der zu übertragenden Nachricht durch den zweiten Server;
- Mittel zur Erzeugung des wenigstens einen digitalen Datenstroms, der geeignet ist, in dem Kommunikationsendgerät aufgezeichnet zu werden.

9. Computerprogrammprodukt, das aus einem Kommunikationsnetz herunterladbar ist und/oder auf einem computerlesbaren Datenträger gespeichert ist und/oder durch einen Mikroprozessor ausführbar ist, **dadurch gekennzeichnet, dass** es Programmcodeanweisungen für die Ausführung des Verfahrens nach wenigstens einem der Ansprüche 1 bis 7 umfasst, wenn es auf einem Computer ausgeführt wird.

10. System zur Übertragung einer Nachricht an ein Kommunikationsendgerät, Mittel zur Aufzeichnung wenigstens einer Sprach- oder Videonachricht, die für einen Zielbenutzer bestimmt ist, durch wenigstens einen anrufenden Benutzer in einer Datenbank eines ersten Servers umfassend, **dadurch gekennzeichnet, dass** das System Mittel zur Auswahl einer Nachricht in der Datenbank zwecks ihrer Übertragung an das Kommunikationsendgerät und zwecks ihrer Aufzeichnung in dem Kommunikationsendgerät umfasst, wobei die Mittel zur Auswahl umfassen:
- Mittel zur Verbindung eines Endgerätes des Zielbenutzers mit einem zweiten Server über ein erstes Kommunikationsnetz;
- Mittel zur Präsentation wenigstens einer für den Zielbenutzer bestimmten Nachricht durch den zweiten Server;
- Mittel zur Auswahl der zu übertragenden Nachricht aus der wenigstens einen für den Benutzer bestimmten Nachricht durch den Zielbenutzer.

## Claims

1. Method for transferring a message to a communication terminal, comprising a step of recording, by at least one calling user, of at least one voice or video message, intended for a recipient user, in a database of a first server, said method being **characterized in that** it comprises a step of selection of a message within the database for it to be transferred to said communication terminal, and for it to be recorded within said communication terminal, said selection step comprising:
- a step of connection, of a terminal of the recipient user, to a second server, through a first communication network;
- a step of presentation, by said second server, of at least one message intended for said recipient user;
- a step of selection, by said recipient user, from said at least one message, of said message to be transferred.

2. Method according to Claim 1, **characterized in that** said method further comprises a step of transfer of said message from said database to said communication terminal.

3. Method according to Claim 2, **characterized in that** said method further comprises a step of recording of said message in a memory space of said terminal.

4. Method according to either one of Claims 2 or 3, **characterized in that** it further comprises:
- a step of synchronous transfer of said message to said communication terminal;
- a phase of acknowledgement of a reception of said message by said communication terminal.

5. Method according to any one of Claims 2 to 4, **characterized in that** it further comprises:
- a step of computation of an initial size of said message to be transferred;
- a step of comparison of said initial size with a predetermined maximum transfer size; and
- a step of conversion of said message to be transferred into a converted message if the initial size exceeds the predetermined maximum transfer size;
- a step of production of at least one digital stream from said message to be transferred or said converted message if the initial size exceeds the predetermined maximum transfer size.

6. Method according to either one of Claims 4 or 5, **characterized in that** said synchronous transfer step comprises:
- a step of encapsulation of said at least one digital stream within a multimedia message observing a format accommodated by said communication terminal;
- a step of sending of at least one synchronous communication initiation service message to said communication terminal;
- a step of establishment, by said communication terminal, within a second communication network, of a synchronous communication with the first server on reception of said at least one service message;
- a step of transfer, within said synchronous communication, of said multimedia message to said communication terminal;
- a step of recording, within said communication terminal, of said multimedia message.

7. Method according to any one of Claims 1 to 6, **characterized in that** it further comprises a step of selection of at least one recipient of said at least one message.

8. Server for transferring at least one digital data stream representative of a voice or video message intended for a recipient user, to a communication terminal, said message being recorded by at least one calling user in a messaging service via said transfer server,
**characterized in that** said transfer server is coupled with a second server, which gives access to said messaging service of said recipient user, guiding said user in operations to access said messaging service and **in that** said transfer server comprises:
- means for identifying, via said second server, said message to be transferred;
- means for creating said at least one digital data stream that can be recorded within said communication terminal.

9. Computer program product that can be downloaded from a communication network and/or stored on a computer-readable medium and/or that can be executed via a microprocessor, **characterized in that** it comprises program code instructions for executing the method according to at least one of Claims 1 to 7, when it is run on a computer.

10. System for transferring a message to a communication terminal comprising means for recording, by at least one calling user, at least one voice or video message intended for a recipient user, in a database of a first server, **characterized in that** said system comprises means for selecting a message within the database for it to be transferred to said communication terminal, and for it to be recorded within said communication terminal, said selection means comprising:
- means for connecting a recipient user terminal to a second server through a first communication network;
- means for presenting, by said second server, at least one message intended for said recipient user;
- means for said recipient user to select, from said at least one message intended for said user, said message to be transferred.
